# EUROPEAN PATENT APPLICATION

(11) **EP 3 382 739 A1**
(43) Date of publication of application: **03.10.2018**
(21) Application number: 18164364.4
(22) Date of filing: 27.03.2018
(51) Int. Cl.: H01J 49/14, H01J 49/06

(54) **SYSTEMS AND METHODS FOR ELECTRON IONIZATION ION SOURCES**

(30) Priority: 28.03.2017 US 201762477982 P
(71) Applicant: Thermo Finnigan LLC, San Jose, CA 95134 (US)
(72) Inventor: McCAULEY, Edward B., San Jose, CA California 95134 (US)
(74) Representative: Boult Wade Tennant LLP

(57) **Abstract**

A mass spectrometer system includes an ion source and a controller. The ion source includes a body having a length along a source axis from the first end to the second end; an electron source positioned at the first end and configured for accelerating an electron beam through the ionization chamber along the source axis. The controller is configured to operate the ion source in a high robustness mode by setting a second lens voltage and a filament voltage to minimize electron reflection back along the source axis towards the electron source; and operate the ion source in a high sensitivity mode by setting second lens voltage and a filament voltage to cause electron reflection back along the source axis towards the electron source.

## Description

### FIELD

The present disclosure generally relates to the field of mass spectrometry including systems and method for electron ionization sources.

### INTRODUCTION

Mass spectrometry can be used to perform detailed analyses on samples. Furthermore, mass spectrometry can provide both qualitative (is compound X present in the sample) and quantitative (how much of compound X is present in the sample) data for a large number of compounds in a sample. These capabilities have been used for a wide variety of analyses, such as to test for drug use, determine pesticide residues in food, monitor water quality, and the like.

Sensitivity of a mass spectrometer can be limited by the efficiency of the ion source, ion losses through the mass spectrometer and in the mass analyzer, and sensitivity of the detector. Increasing the efficiency of the ion source, the number of ions produced per unit sample or per unit time, can significantly improve the detection limits of the mass spectrometer, enabling the detection of lower concentrations of compounds or the use of smaller amounts of sample. However, increasing the number of ions produced can also have the deleterious effect of reducing ion source robustness, necessitating the need to clean the ion source optics more frequently. As such, there is a need for improved ion sources.

### SUMMARY

In a first aspect, a mass spectrometer system can include an ion source and a controller. The ion source can include a body comprising an ionization chamber at a first end, a sample inlet into the ionization chamber, and a post ionization volume at a second end, the body having a length along a source axis from the first end to the second end; an electron source positioned at the first end, the electron source including a thermionic filament and a repeller, and the electron source configured for accelerating an electron beam through the ionization chamber along the source axis and repelling ions produced in the ionization volume away from the electron source; a first lens element positioned adjacent to the post ionization volume at the second end; and a second lens element positioned adjacent to the first lens element. The controller can be configured to operate the ion source in a high robustness mode by setting a second lens voltage and a filament voltage to minimize electron reflection back along the source axis towards the electron source; and operate the ion source in a high sensitivity mode by setting second lens voltage and a filament voltage to cause electron reflection back along the source axis towards the electron source.

In various embodiments of the first aspect, the ion source can further include a magnet assembly configured to provide an axial magnetic field in the ionization chamber.

In various embodiments of the first aspect, the second lens voltage can be less negative than the filament voltage in high robustness mode.

In various embodiments of the first aspect, the second lens voltage can be more negative than the filament voltage in high sensitivity mode.

In various embodiments of the first aspect, the controller can be further configured to the ion source in high robustness mode when performing a full scan.

In various embodiments of the first aspect, the controller can be further configured to the ion source in high robustness mode when analyzing a high abundance analyte or high abundance matrix.

In various embodiments of the first aspect, the controller can be further configured to the ion source in high sensitivity mode when performing single ion monitoring or single reaction monitoring.

In various embodiments of the first aspect, the controller can be further configured to operate the source in high robustness mode for a first subset of a mass range and operate the source in high sensitivity mode for a second subset of the mass range. In particular embodiments, the controller can be further configured to combine high robustness mode data from the first subset of the mass range and high sensitivity mode data from the second subset of the mass range into a high dynamic range mass spectrum.

In various embodiments of the first aspect, the controller can be further configured to operate the source in high robustness mode for a scan of a mass range of a sample and operate the source in high sensitivity mode for single ion monitoring or single reaction monitoring for a subset of analytes in the sample.

In a second aspect, a method of analyzing a sample can include providing at least a portion of a sample to an ionization chamber of an ion source, the ion source including an electron source including a thermionic filament and a repeller and configured for accelerating an electron beam through the ionization chamber along the source axis towards a lens element; ionizing components of the sample in the ion source to form a first set of ionized components under conditions of low electron reflection; performing a mass scan of the first set of ionized components of the sample; ionizing components of the sample in the ion source to form a second set of ionized components under conditions where electrons are reflected along the axis back towards the electron source by the lens element; and performing single ion monitoring or single reaction monitoring of a subset of the second set of ionized components.

In various embodiments of the second aspect, under conditions of low electron reflection, the lens voltage can be less negative than the filament voltage.

In various embodiments of the second aspect, under conditions where electrons are reflected along the axis back towards the electron source by the lens element, the lens voltage can be more negative than the filament voltage.

In a third aspect, a method of analyzing a sample can include providing at least a portion of a sample to an ionization chamber of an ion source, the ion source including an electron source including a thermionic filament and a repeller and configured for accelerating an electron beam through the ionization chamber along the source axis towards a lens element; ionizing components of the sample in the ion source to form a first set of ionized components under conditions of low electron reflection lens element; performing a first mass scan of a first mass range of the first set of ionized components of the sample; ionizing components of the sample in the ion source to form a second set of ionized components under conditions where electrons are reflected along the axis back towards the electron source by the lens element; and performing a second mass scan of a second mass range of the second set of ionized components of the sample.

In various embodiments of the third aspect, the method can further include combining data from the first mass scan and the second mass scan into a high dynamic range mass spectrum.

In various embodiments of the third aspect, under conditions of low electron reflection, the lens voltage can be less negative than the filament voltage.

In various embodiments of the third aspect, under conditions where electrons are reflected along the axis back towards the electron source by the lens element, the lens voltage can be more negative than the filament voltage.

In various embodiments of the third aspect, the first mass range can include a high abundance analyte and the second mass range can include a low abundance analyte.

In various embodiments of the third aspect, under conditions of low electron reflection, the lens voltage may be less negative than the filament voltage.

In various embodiments of the third aspect, under conditions where electrons are reflected along the axis back towards the electron source by the lens element, the lens voltage may be more negative than the filament voltage.

In various embodiments of the third aspect, the first mass range may include a high abundance analyte and the second mass range may include a low abundance analyte.

### DRAWINGS

For a more complete understanding of the principles disclosed herein, and the advantages thereof, reference is now made to the following descriptions taken in conjunction with the accompanying drawings and exhibits, in which:
Figure 1 is a block diagram of an exemplary mass spectrometry system, in accordance with various embodiments.
Figures 2A and 2B are diagrams illustrating an exemplary ion source, in accordance with various embodiments.
Figure 3A and 3B are diagrams illustrating simulations of electrons in an ion source, in accordance with various embodiments.
Figure 4 is a flow diagram illustrating an exemplary method of operating an ion source, in accordance with various embodiments.
Figure 5 is a block diagram illustrating an exemplary computer system.
Figure 6 is a graph showing exemplary data comparing ion intensity, in accordance with various embodiments.

It is to be understood that the figures are not necessarily drawn to scale, nor are the objects in the figures necessarily drawn to scale in relationship to one another. The figures are depictions that are intended to bring clarity and understanding to various embodiments of apparatuses, systems, and methods disclosed herein. Wherever possible, the same reference numbers will be used throughout the drawings to refer to the same or like parts. Moreover, it should be appreciated that the drawings are not intended to limit the scope of the present teachings in any way.

### DESCRIPTION OF VARIOUS EMBODIMENTS

Embodiments of systems and methods for ion isolation are described herein and in the accompanying exhibits.

The section headings used herein are for organizational purposes only and are not to be construed as limiting the described subject matter in any way.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form. Furthermore, one skilled in the art can readily appreciate that the specific sequences in which methods are presented and performed are illustrative and it is contemplated that the sequences can be varied and still remain within the spirit and scope of the various embodiments disclosed herein.

All literature and similar materials cited in this application, including but not limited to, patents, patent applications, articles, books, treatises, and internet web pages are expressly incorporated by reference in their entirety for any purpose. Unless described otherwise, all technical and scientific terms used herein have a meaning as is commonly understood by one of ordinary skill in the art to which the various embodiments described herein belongs.

It will be appreciated that there is an implied "about" prior to the temperatures, concentrations, times, pressures, flow rates, cross-sectional areas, etc. discussed in the present teachings, such that slight and insubstantial deviations are within the scope of the present teachings. In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

A "system" sets forth a set of components, real or abstract, comprising a whole where each component interacts with or is related to at least one other component within the whole.

### MASS SPECTROMETRY PLATFORMS

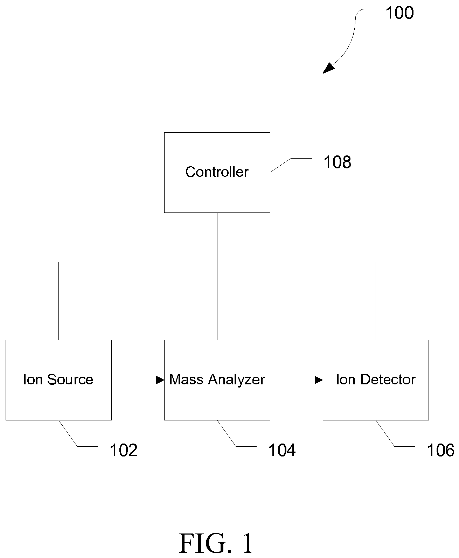

Various embodiments of mass spectrometry platform 100 can include components as displayed in the block diagram of Figure 1. In various embodiments, elements of Figure 1 can be incorporated into mass spectrometry platform 100. According to various embodiments, mass spectrometer 100 can include an ion source 102, a mass analyzer 104, an ion detector 106, and a controller 108.

In various embodiments, the ion source 102 generates a plurality of ions from a sample. The ion source can include, but is not limited to, a matrix assisted laser desorption/ionization (MALDI) source, electrospray ionization (ESI) source, atmospheric pressure chemical ionization (APCI) source, atmospheric pressure photoionization source (APPI), inductively coupled plasma (ICP) source, electron ionization source, chemical ionization source, photoionization source, glow discharge ionization source, thermospray ionization source, and the like.

In various embodiments, the mass analyzer 104 can separate ions based on a mass to charge ratio of the ions. For example, the mass analyzer 104 can include a quadrupole mass filter analyzer, a quadrupole ion trap analyzer, a time-of-flight (TOF) analyzer, an electrostatic trap (e.g., ORBITRAP) mass analyzer, Fourier transform ion cyclotron resonance (FT-ICR) mass analyzer, and the like. In various embodiments, the mass analyzer 104 can also be configured to fragment the ions using collision induced dissociation (CID) electron transfer dissociation (ETD), electron capture dissociation (ECD), photo induced dissociation (PID), surface induced dissociation (SID), and the like, and further separate the fragmented ions based on the mass-to-charge ratio.

In various embodiments, the ion detector 106 can detect ions. For example, the ion detector 106 can include an electron multiplier, a Faraday cup, and the like. Ions leaving the mass analyzer can be detected by the ion detector. In various embodiments, the ion detector can be quantitative, such that an accurate count of the ions can be determined.

In various embodiments, the controller 108 can communicate with the ion source 102, the mass analyzer 104, and the ion detector 106. For example, the controller 108 can configure the ion source or enable/disable the ion source. Additionally, the controller 108 can configure the mass analyzer 104 to select a particular mass range to detect. Further, the controller 108 can adjust the sensitivity of the ion detector 106, such as by adjusting the gain. Additionally, the controller 108 can adjust the polarity of the ion detector 106 based on the polarity of the ions being detected. For example, the ion detector 106 can be configured to detect positive ions or be configured to detected negative ions.

### ION SOURCE

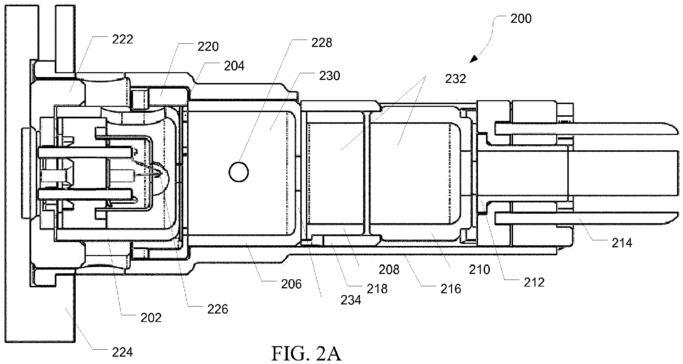

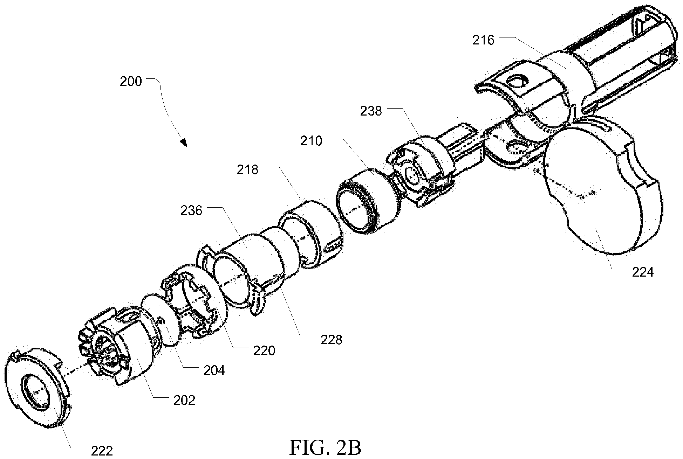

Figures 2A and 2B are diagrams illustrating an ion source 200, which can be used as ion source 102 of mass spectrometry platform 100. Ion source 200 can include an electron source 202, an electron lens 204, an ionization chamber 206, lens elements 208, 210, and 212, and RF ion guide 214. Additionally, ion source 200 can include a body 216, insulator 218, spacers 220 and 222, and retaining clip 224.

Electron source 202 can include a thermionic filament 226 for the generation of electrons. In various embodiments, electron source 202 can include more additional thermionic filaments for redundancy or increased electron production. In alternate embodiments, electron source 202 can include a field emitter. The electrons can travel axially along ion source 200 into ionization chamber 206 to ionize gas molecules. Electron lens 204 can serve to prevent the ions from traveling back towards the electron source.

Ionization chamber 206 can include gas inlet 228 for directing a gas sample into an ionization volume 230 defined by the ionization chamber 206. Gas molecules within the ionization volume 230 can be ionized by the electrons from the thermionic filament 226. Lenses 208 and 210 can define a post ionization volume 232. Post ionization volume 232 can be a region where ions can be formed which has a lower pressure for the sample. Post ionization volume 232 can include regions of the lenses where electrons are present. In various embodiments, it may also include areas outside of the ionization volume and the lenses. Wall 234 can restrict the flow of gas from ionization volume 230 to the post ionization volume 232, creating a substantial pressure difference between the ionization volume 230 and post ionization volume 232. While ionization can occur in post ionization volume 232, significantly more ions can be generated in ionization volume 230 due to the lower sample density in the post ionization volume 232.

In various embodiments, the ionization chamber 206 and lens element 208 can be joined to create an extended ionization element 236 defining the ionization volume 230 and at least a portion of the post ionization volume 232. In such embodiments, lens element 208 can be electrically coupled to ionization chamber 206. In other embodiments, the joined ionization chamber 206 and lens element 208 can be electrically isolated, such that different voltage potentials can be applied to the ionization chamber 206 and the lens element 208.

Lens 210 and 212 and RF ion guide 214 can assist in the axial movement of ions from the ionization volume 230 to additional ion optical elements and mass analyzer 104 of mass spectrometry platform 100. In various embodiments, ion guide assembly 238 can include lens 212 and RF ion guide 214. Ion guide assembly 238 can include additional insulating portions to electrically isolate lens 212 from RF ion guide 214. Additionally, the insulating portions can include standoffs to prevent electrical contact between lens 210 and lens 212.

When assembled into body 216, insulator 218 can prevent electrical contact between lens 208 (or extended ionization element 236) and lens 210. Spacers 220 can prevent electrical contact between electron lens 204 and ionization chamber 208 (or extended ionization element 236). Spacer 222 can be indexed to prevent rotation of the electron source 202, and retaining clip 224 can hold the other components within body 216.

### DUAL MODE

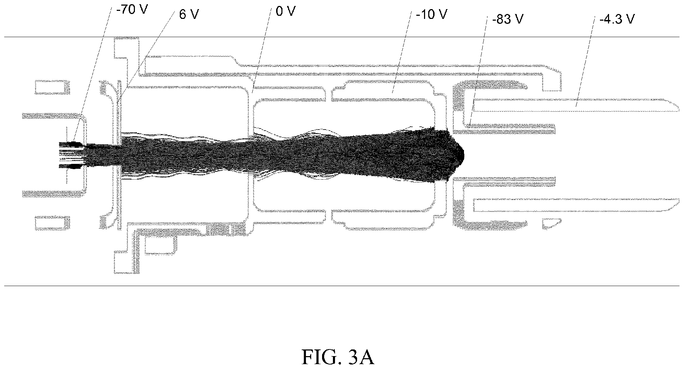

Figure 3A is an illustration of a simulation of electrons in ion source 200 with forced electrostatic reflection of the electrons. The electrons can be electrostatically reflected by lens element 212 when the lens potential is sufficiently more negative on its axis than the electron energy of the electrons produced in the electron source 202. Potentials used for the simulation are shown in Figure 3A and Table 1. In various embodiments, filament 226 can have a potential of between about -40V and -80V, such as about -45 V, and electron lens 204 can have a potential between about 0 V to about 15 V, such as between about 5 V and about 7 V. Ionization chamber 206 and lens element 208 can be grounded (about 0 V), and lens element 210 can have a potential of between about 0 V and about -15 V, such as between about -2 V and about -10 V. Lens element 212 can have a potential of between about -50 V and about -150 V, and RF ion guide 214 can have an offset voltage of about -15 V to about 1 V. In other embodiments, filament 226 can have a potential of about -70 V and lens element 212 can have a potential of between about -83 V and about -150 V.

**Table 1: Electrostatic Reflection**

| | Simulation | Alternative 1 | Alternative 2 |
|---|---|---|---|
| Filament 226 | -70 V | -45 V | -70 V |
| Electron Lens 204 | 6 V | 0 V to 15 V | 0 V to 15 V |
| Ionization Chamber 206 | 0 V (grounded) | 0 V (grounded) | 0 V (grounded) |
| Lens 208 | 0 V (grounded) | 0 V (grounded) | 0 V (grounded) |
| Lens 210 | -10 V | 0 V to -15 V | 0 V to -15 V |
| Lens 212 | -83 V | -50 V to -150 V | -83 V and-150 V |
| RF Ion Guide 214 | -4.3 V | -15 V to 1V | -15 V to 1V |

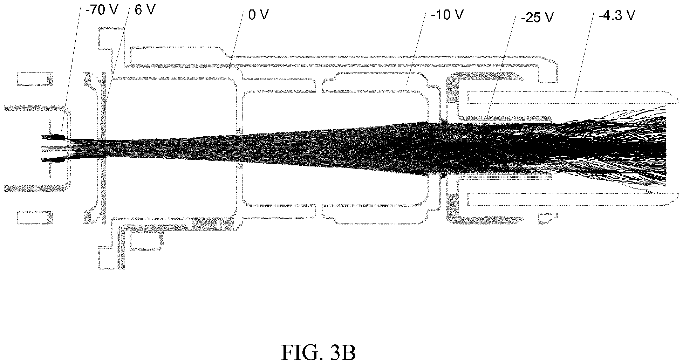

Figure 3B is an illustration of a simulation of electrons in ion source 200 without forced electrostatic reflection of electrons. When the on-axis lens potentials of lens elements 208, 210, and 212 are less negative than the electron energy of the electrons produced in the electron source 202, the amount of electron reflection can be reduced. Potentials used for the simulation are shown in Figure 3B and Table 2. In various embodiments, filament 226 can have a potential of between about -80V and - 40V, such as about -70 V, and electron lens 204 can have a potential between about 0 V to about 15 V, such as between about 5 V and about 7 V. Ionization chamber 206 and lens element 208 can be grounded (about 0 V), and lens element 210 can have a potential of between about 0 V and about -15 V, such as between about -2 V and about -10 V. Lens element 212 can have a potential more negative than the filament 226, such as between about -15 V and about -40 V, and RF ion guide 214 can have an offset voltage of about -15 V to about 1 V. In other embodiments, lens element 208 can have a potential of between about 0 V and about -65 V, lens element 212 can have a potential of between about 0 V and about -65 V, and lens element 212 can have a potential of between about -15 V and about -65 V.

**Table 2: Without Electrostatic Reflection**

| | Simulation | Alternative 1 | Alternative 2 |
|---|---|---|---|
| Filament 226 | -70 V | -70 V | -70 V |
| Electron Lens 204 | 6 V | 0 V to 15 V | 0 V to 15 V |
| Ionization Chamber 206 | 0 V (grounded) | 0 V (grounded) | 0 V (grounded) |
| Lens 208 | 0 V (grounded) | 0 V (grounded) | 0 V to -65 V |
| Lens 210 | -10 V | 0 V to -15 V | 0 V to -65 V |
| Lens 212 | -25 V | -15 V to -65 V | -15 V and -65 V |
| RF Ion Guide 214 | -4.3 V | -15 V to 1V | -15 V to 1V |

The sensitivity of electron impact ionization mass spectrometry can be a function of the number of ions produced for a given analyte. EI sources can degrade in sensitivity over time as a function of the numbers of ions produced. Increasing the number of ions formed can cause deposits in the source that may need to be cleaned off periodically to restore or maintain sensitivity. Thus, there can be a balance between sensitivity and ion source longevity between maintenance steps. Additionally, detector performance, such as for an electron multiplier, can degrade over time from the detection of ions.

Ion source 200 can be switched between a reflecting high sensitivity mode and a non-reflective high robustness mode by changing the lens potentials. High sensitivity mode can be used for samples in SRM (selected reaction monitoring) or SIM (selected ion monitoring) modes of operation. Additionally, samples used for high sensitivity mode can be limited to samples with a relatively clean sample matrix to reduce contamination of ion optics. High robustness mode can be used for full scan modes of operation for samples with relatively abundant analyte or samples with relatively abundant matrix compounds or with SRM or SIM modes of operation for samples with relatively abundant analyte. For these situations, the high robustness mode can reduce ion contamination of optics or degradation of detector performance. High robustness mode can be used for samples with relatively abundant analyte which may otherwise generate signal above optimal level for the detector and where reducing the sample amount may not be favorable due to activity or losses during sample introduction if the sample amount were lower.

In various embodiments, the number of ions produced in the source in high sensitivity mode with a high degree of electron reflection can be more than about 3 times greater than the number of ions produced in the source in high robustness mode with a low degree of electron reflection, such as more than about 4 times greater, even more than about 5 times greater.

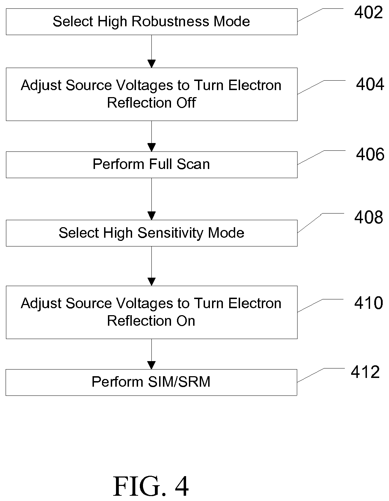

Figure 4 is flow diagram illustrating a method 400 of utilizing ion source 200 in high robustness mode and high sensitivity mode. At 402, high robustness mode can be selected. In various embodiments, an operator may select high robustness mode, such as when setting up an experiment, or the system may automatically select high robustness mode depending on the method chosen, such as a full scan. At 404, the source voltages can be adjusted so that electrons are not reflected within the source, and at 406, a full scan of a sample can be performed. At 408, high sensitivity mode can be selected. In various embodiments, an operator may select high sensitivity mode, such as when setting up an experiment, or the system may automatically select high sensitivity mode based on the method chosen, such as SIM or SRM. At 410, the source voltages can be adjusted so that electrons are reflected within the source, and at 406, a SIM or SRM of a sample can be performed.

In various embodiments, a method can be chosen that performs a full scan in high robustness mode and when target ions are present, SRM or SIM of the ion can be performed in high sensitivity mode. In various embodiments, the method can be a data dependent method, such that the presence of ions (either known or unknown) can trigger SRM of the ion. In other embodiments, the method can be a predefined method that can perform full scan periodically during a chromatographic separation, and perform SRM or SIM of a target ion during a particular retention time window.

In various embodiments, a method can be chosen that performs a full scan of a mass range in high robustness mode and a full scan of another mass range in high sensitivity mode. Specifically, mass ranges containing high abundance ions can be scanned using high robustness mode and mass ranges containing low abundance ions can be scanned using high sensitivity mode to provide a greater dynamic range than can be achieved with a single mode alone. These scans can be combined to produce a single scan which has a greater dynamic range than can be achieved with a single mode alone.

### COMPUTER-IMPLEMENTED SYSTEM

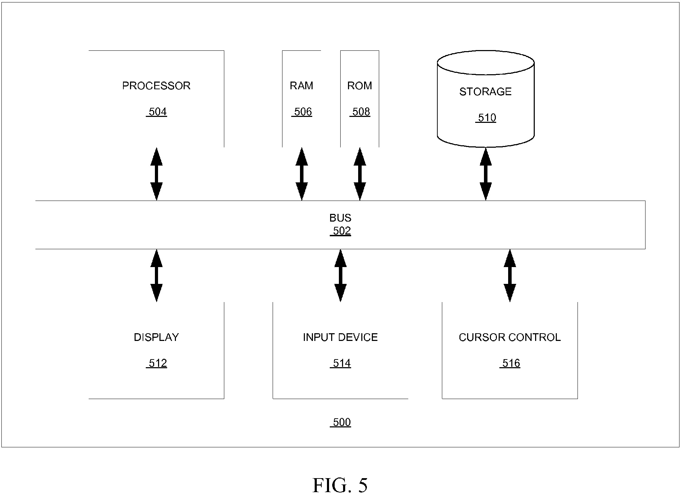

Figure 5 is a block diagram that illustrates a computer system 500, upon which embodiments of the present teachings may be implemented as which may incorporate or communicate with a system controller, for example controller 58 shown in Figure. 1, such that the operation of components of the associated mass spectrometer may be adjusted in accordance with calculations or determinations made by computer system 500. In various embodiments, computer system 500 can include a bus 502 or other communication mechanism for communicating information, and a processor 504 coupled with bus 502 for processing information. In various embodiments, computer system 500 can also include a memory 506, which can be a random access memory (RAM) or other dynamic storage device, coupled to bus 502, and instructions to be executed by processor 504. Memory 506 also can be used for storing temporary variables or other intermediate information during execution of instructions to be executed by processor 504. In various embodiments, computer system 500 can further include a read only memory (ROM) 508 or other static storage device coupled to bus 502 for storing static information and instructions for processor 504. A storage device 510, such as a magnetic disk or optical disk, can be provided and coupled to bus 502 for storing information and instructions.

In various embodiments, computer system 500 can be coupled via bus 502 to a display 512, such as a cathode ray tube (CRT) or liquid crystal display (LCD), for displaying information to a computer user. An input device 514, including alphanumeric and other keys, can be coupled to bus 502 for communicating information and command selections to processor 504. Another type of user input device is a cursor control 516, such as a mouse, a trackball or cursor direction keys for communicating direction information and command selections to processor 504 and for controlling cursor movement on display 512. This input device typically has two degrees of freedom in two axes, a first axis (i.e., x) and a second axis (i.e., y), that allows the device to specify positions in a plane.

A computer system 500 can perform the present teachings. Consistent with certain implementations of the present teachings, results can be provided by computer system 500 in response to processor 504 executing one or more sequences of one or more instructions contained in memory 506. Such instructions can be read into memory 506 from another computer-readable medium, such as storage device 510. Execution of the sequences of instructions contained in memory 506 can cause processor 504 to perform the processes described herein. In various embodiments, instructions in the memory can sequence the use of various combinations of logic gates available within the processor to perform the processes describe herein. Alternatively hard-wired circuitry can be used in place of or in combination with software instructions to implement the present teachings. In various embodiments, the hard-wired circuitry can include the necessary logic gates, operated in the necessary sequence to perform the processes described herein. Thus implementations of the present teachings are not limited to any specific combination of hardware circuitry and software.

The term "computer-readable medium" as used herein refers to any media that participates in providing instructions to processor 504 for execution. Such a medium can take many forms, including but not limited to, non-volatile media, volatile media, and transmission media. Examples of non-volatile media can include, but are not limited to, optical or magnetic disks, such as storage device 510. Examples of volatile media can include, but are not limited to, dynamic memory, such as memory 506. Examples of transmission media can include, but are not limited to, coaxial cables, copper wire, and fiber optics, including the wires that comprise bus 502.

Common forms of non-transitory computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, PROM, and EPROM, a FLASH-EPROM, any other memory chip or cartridge, or any other tangible medium from which a computer can read.

In accordance with various embodiments, instructions configured to be executed by a processor to perform a method are stored on a computer-readable medium. The computer-readable medium can be a device that stores digital information. For example, a computer-readable medium includes a compact disc read-only memory (CD-ROM) as is known in the art for storing software. The computer-readable medium is accessed by a processor suitable for executing instructions configured to be executed.

In various embodiments, the methods of the present teachings may be implemented in a software program and applications written in conventional programming languages such as C, C++, etc.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied and still remain within the spirit and scope of the various embodiments.

The embodiments described herein, can be practiced with other computer system configurations including hand-held devices, microprocessor systems, microprocessor-based or programmable consumer electronics, minicomputers, mainframe computers and the like. The embodiments can also be practiced in distributing computing environments where tasks are performed by remote processing devices that are linked through a network.

It should also be understood that the embodiments described herein can employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

Any of the operations that form part of the embodiments described herein are useful machine operations. The embodiments, described herein, also relate to a device or an apparatus for performing these operations. The systems and methods described herein can be specially constructed for the required purposes or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

Certain embodiments can also be embodied as computer readable code on a computer readable medium. The computer readable medium is any data storage device that can store data, which can thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion.

### RESULTS

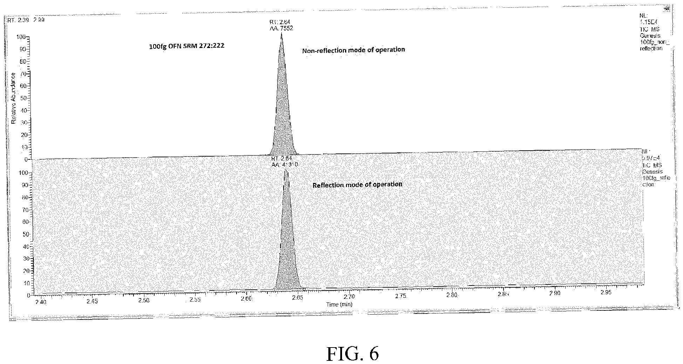

Figure 6 shows exemplary chromatograms comparing ion intensities between the high robustness low electron reflection mode and the high sensitivity high electron reflection mode. 100 fg of OFN is applied to a GC column and the single reaction monitoring was performed for a precursor mass of 272 Th and a product mass of 222 Th. A peak area for OFN of 7552 is obtained with low electron reflection, and a peak area for OFN of 41310 is obtained with high electron reflection. It is apparent that the number of ions produced with high electron reflection is greater than 5 times the number of ions produced with low electron reflection.

## Claims

1. A mass spectrometer system comprising:
an ion source comprising:
a body comprising an ionization chamber at a first end, a sample inlet into the ionization chamber, and a post ionization volume at a second end, the body having a length along a source axis from the first end to the second end;
an electron source positioned at the first end, the electron source including a thermionic filament and a repeller, and the electron source configured for accelerating an electron beam through the ionization chamber along the source axis and repelling ions produced in the ionization volume away from the electron source;
a first lens element positioned adjacent to the post ionization volume at the second end; and
a second lens element positioned adjacent to the first lens element; and
a controller configured to:
operate the ion source in a high robustness mode by setting a second lens voltage and a filament voltage to minimize electron reflection back along the source axis towards the electron source; and
operate the ion source in a high sensitivity mode by setting second lens voltage and a filament voltage to cause electron reflection back along the source axis towards the electron source.

2. The ion source of claim 1, wherein the ion source further includes a magnet assembly configured to provide an axial magnetic field in the ionization chamber.

3. The ion source of claim 1 wherein the second lens voltage is less negative than the filament voltage in high robustness mode.

4. The ion source of claim 1 wherein the second lens voltage is more negative than the filament voltage in high sensitivity mode.

5. The ion source of claim 1 wherein the controller is further configured to the ion source in high robustness mode when performing a full scan.

6. The ion source of claim 1 wherein the controller is further configured to the ion source in high robustness mode when analyzing a high abundance analyte or high abundance matrix.

7. The ion source of claim 1 wherein the controller is further configured to the ion source in high sensitivity mode when performing single ion monitoring or single reaction monitoring.

8. The ion source of claim 1 wherein the controller is further configured to operate the source in high robustness mode for a first subset of a mass range and operate the source in high sensitivity mode for a second subset of the mass range.

9. The ion source of claim 8 wherein the controller is further configured to combine high robustness mode data from the first subset of the mass range and high sensitivity mode data from the second subset of the mass range into a high dynamic range mass spectrum.

10. The ion source of claim 1 wherein the controller is further configured to operate the source in high robustness mode for a scan of a mass range of a sample and operate the source in high sensitivity mode for single ion monitoring or single reaction monitoring for a subset of analytes in the sample.

11. A method of analyzing a sample comprising:
providing at least a portion of a sample to an ionization chamber of an ion source, the ion source including an electron source including a thermionic filament and a repeller and configured for accelerating an electron beam through the ionization chamber along the source axis towards a lens element;
ionizing components of the sample in the ion source to form a first set of ionized components under conditions of low electron reflection;
performing a first mass scan of a first mass range of the first set of ionized components of the sample;
ionizing components of the sample in the ion source to form a second set of ionized components under conditions where electrons are reflected along the axis back towards the electron source by the lens element; and
performing (i) a single ion monitoring or single reaction monitoring of a subset of the second set of ionized components, or (ii) a second mass scan of a second mass range of the second set of ionized components of the sample.

12. The method of claim 11 wherein, under conditions of low electron reflection, the lens voltage is less negative than the filament voltage.

13. The method of claim 11 wherein, under conditions where electrons are reflected along the axis back towards the electron source by the lens element, the lens voltage is more negative than the filament voltage.

14. The method of claim 11 further comprising combining data from the first mass scan and the second mass scan into a high dynamic range mass spectrum.

15. The method of claim 11 wherein the first mass range includes a high abundance analyte and the second mass range includes a low abundance analyte.
